# EUROPEAN PATENT APPLICATION

(11) **EP 4 671 255 A1**
(43) Date of publication of application: **31.12.2025**
(21) Application number: 23929490.3
(22) Date of filing: 31.03.2023
(51) Int. Cl.: C07F 7/18, H01M 10/0567, C07D 327/10, C07F 7/02, C07F 7/10, H01M 10/0525

(54) **SILICON-CONTAINING COMPOUND, ELECTROLYTE FOR SECONDARY BATTERY, AND SECONDARY BATTERY AND ELECTRIC DEVICE**

(71) Applicant: Contemporary Amperex Technology Co., Limited, Ningde, Fujian 352100 (CN)
(72) Inventor: LIU, Jing, Ningde, Fujian 352100 (CN); XU, Ningbo, Ningde, Fujian 352100 (CN); CHEN, Peipei, Ningde, Fujian 352100 (CN)
(74) Representative: Kraus & Lederer PartGmbB
(86) International application number: PCT/CN2023/085716
(87) International publication number: WO 2024/197907

(57) **Abstract**

The present disclosure provides a silicon-containing compound, an electrolyte solution for a secondary battery, a secondary battery, and an electrical device. The silicon-containing compound has a general formula represented by formula I, where X₁ and X₂ each independently include -NR₄- or -O-; R₃ includes hydrogen, halogen, carbonyl, carboxyl, ester group, cyano, etheralkyl, halogen-substituted or unsubstituted C₁-C₁₀ alkyl, halogen-substituted or unsubstituted C₆-C₆₀ aryl, halogen-substituted or unsubstituted cyclic sulfonate group, halogen-substituted or unsubstituted cyclic sulfate group, halogen-substituted or unsubstituted cyclic sulfite group, halogen-substituted or unsubstituted cyclic sulfone group, or halogen-substituted or unsubstituted cyclic carbonate group; and R₁, R₂, R₄, and R₅¹ each independently include hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl.

## Description

### TECHNICAL FIELD

The present disclosure relates to the field of secondary battery technologies, and specifically to a silicon-containing compound, an electrolyte solution for a secondary battery, a secondary battery, and an electrical device.

### BACKGROUND

In recent years, secondary batteries have been widely used in energy storage power systems such as hydraulic, thermal, wind, and solar power stations, as well as in various fields such as power tools, electric bicycles, electric motorcycles, electric vehicles, military equipment, aerospace, etc. With the popularization of secondary battery applications, requirements on the energy density, cycle performance, and the like of secondary batteries are becoming higher.

The electrolyte solution is the carrier of ion transport in the secondary battery, and has a function of conducting ions between the positive and negative electrodes of the secondary battery. However, during the charging and discharging process of the secondary battery, the electrolyte solution is easily decomposed to produce by-products, which leads to a significant degrade of the battery performance and even causes safety problems.

### SUMMARY

To solve the above problem, an objective of the present disclosure is to provide a silicon-containing compound, an electrolyte solution for a secondary battery, a secondary battery, and an electrical device. When the silicon-containing compound of the present disclosure is used in an electrolyte solution of a secondary battery, by-products in the electrolyte solution can be removed, and a stable interface coating layer can be formed on the electrode surface to improve interface stability and reduce internal resistance of the battery, thereby improving high-temperature cycle performance and high-temperature storage performance of the battery.

A first aspect of the present disclosure provides a silicon-containing compound, having a general formula represented by formula I, 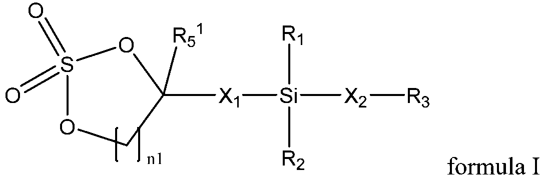
where X₁ and X₂ each independently include 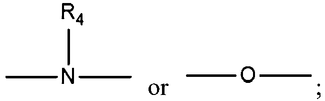
R₃ includes at least one of hydrogen, halogen, carbonyl, carboxyl, ester group, cyano, etheralkyl, halogen-substituted or unsubstituted C₁-C₁₀ alkyl, halogen-substituted or unsubstituted C₆-C₆₀ aryl, halogen-substituted or unsubstituted cyclic sulfonate group, halogen-substituted or unsubstituted cyclic sulfate group, halogen-substituted or unsubstituted cyclic sulfite group, halogen-substituted or unsubstituted cyclic sulfone group, and halogen-substituted or unsubstituted cyclic carbonate group;
R₁, R₂, R₄, and R₅¹ each independently include at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₁ is an integer from 1 to 6, optionally 1 or 2.

The structure of the silicon-containing compound of the present disclosure contains a -N-Si-O-, -N-Si-N-, or -O-Si-O- bond and a cyclic ester structure connected thereto. The Si-N bond and the Si-O bond easily react with by-products such as moisture or hydrogen fluoride present in the battery, causing the chemical bonds to break, effectively removing the moisture or hydrogen fluoride in the battery, reducing the performance degradation caused by moisture or hydrogen fluoride, and improving battery safety. In addition, the cyclic ester structure in the silicon-containing compound can undergo reductive decomposition and ring-opening polymerization on the surface of the active material to form an interface coating layer, to protect the electrode active material from being consumed by components in the electrolyte solution, thereby improving interface stability, reducing interface impedance, and improving cycle stability. The silicon-containing compound provided by the present disclosure can effectively improve the cycle stability and storage stability of the battery, and reduce the internal resistance of the battery.

In an embodiment, R₃ includes at least one of the following groups: 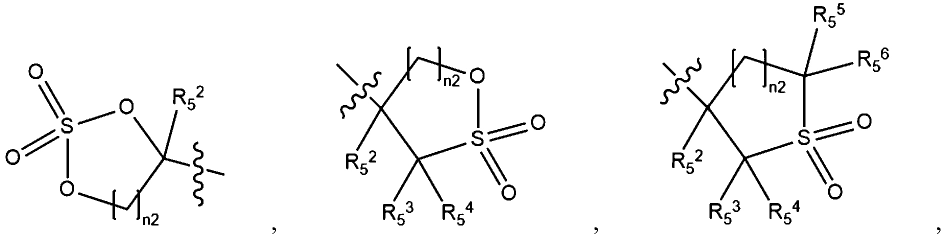 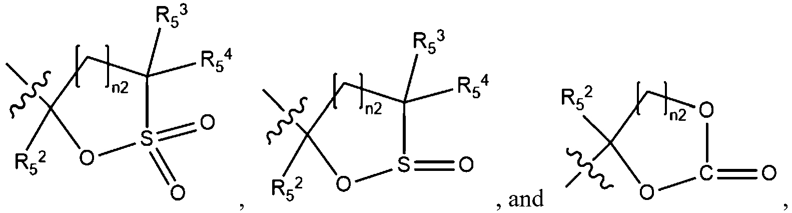
where R₅², R₅³, R₅⁴, *R₅⁵,* and R₅⁶ each independently include at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₂ is an integer from 1 to 6, optionally 1 or 2.

Compared with a monocyclic ester structure, such a bicyclic ester structure connected by the -N-Si-O-, -N-Si-N-, or -O-Si-O- bond can more efficiently improve the battery performance, reduce the internal resistance of the battery, and improve the cycle capacity retention rate and the storage capacity retention rate of the battery.

In an embodiment, the compound represented by formula (I) includes at least one of compounds A11 to A20: 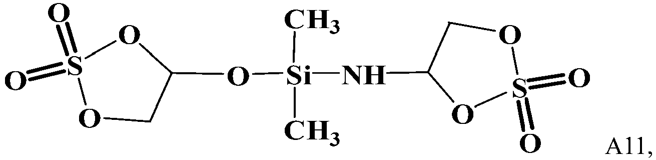 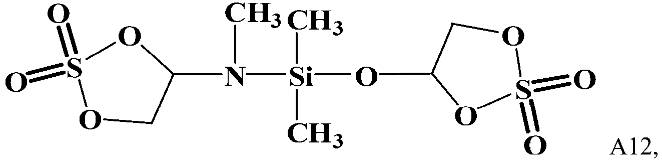 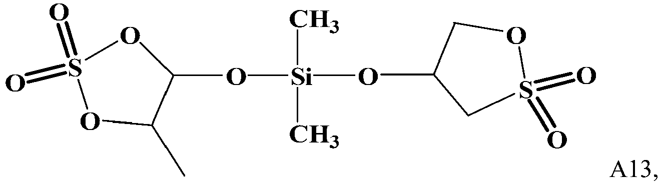 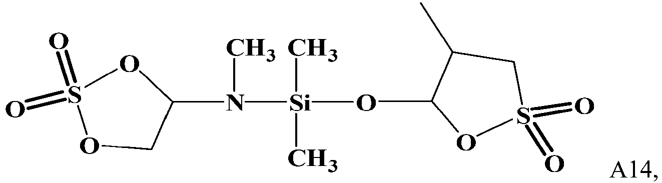 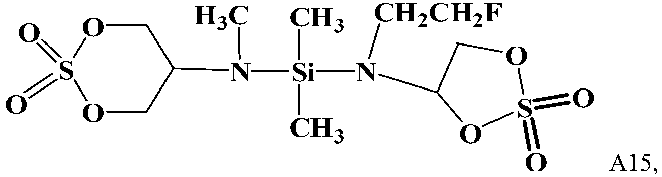 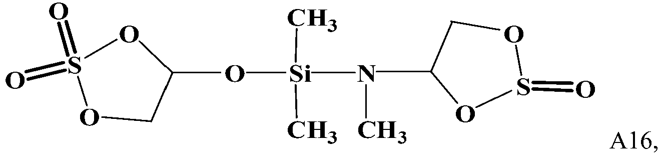 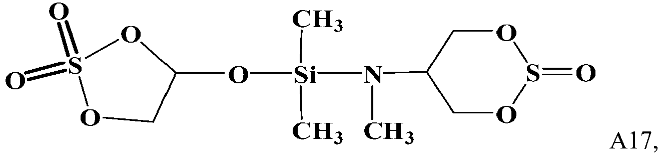 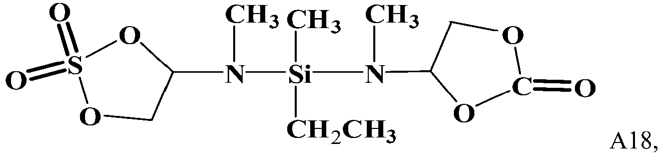 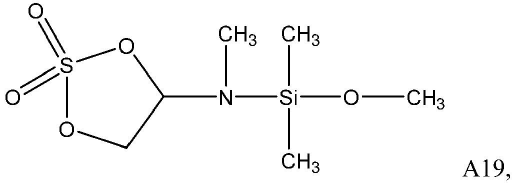 and

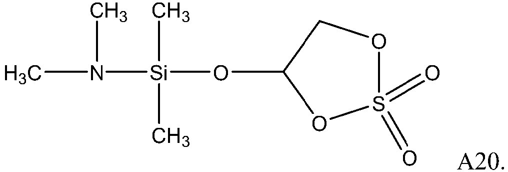

A second aspect of the present disclosure provides an electrolyte solution for a secondary battery, including the silicon-containing compound of the first aspect.

In an embodiment, the content of the silicon-containing compound in the electrolyte solution is less than or equal to 30 wt%, optionally 0.3 wt% to 10 wt% based on the total weight of the electrolyte solution.

When the content of the silicon-containing compound in the electrolyte solution is within a suitable range, the interface stability can be improved, the internal resistance of the battery can be reduced, and the high-temperature cycle performance and storage stability of the battery can be improved.

In an embodiment, the electrolyte solution further includes fluorinated cyclic carbonate.

The fluorinated cyclic carbonate can form synergistic effects with the silicon-containing compound to further improve interface stability, reduce the internal resistance of the battery, and improve the high-temperature cycle performance and high-temperature storage performance of the battery.

In an embodiment, the fluorinated cyclic carbonate includes one or more of fluoroethylene carbonate, difluoroethylene carbonate, trifluoropropylene carbonate, 4-((2,2,3,3-tetrafluoropropoxy)methyl)-1,3-dioxolan-2-one, and 4-(2,2,3,3,4,4,5,5,5-nonafluoropentyl)-1,3-dioxolan-2-one.

The fluorinated cyclic carbonate can form an effective SEI film on the electrode surface to increase the ion migration rate in the electrolyte solution, thereby significantly improving the charging and discharging performance of the battery at high rate. For a silicon-based negative electrode active material, the fluoroethylene carbonate can form a thin SEI film with good toughness and self-healing properties and therefore can suppress the problem of structural fragmentation caused by volume expansion of the silicon-based material during charge and discharge, thereby reducing the irreversible capacity loss of the silicon-based material and prolonging the service life of the battery.

In an embodiment, the content of the fluorinated cyclic carbonate is 2 wt% to 20 wt%, optionally 5 wt% to 15 wt% based on the total weight of the electrolyte solution.

When the content of the fluorinated cyclic carbonate is 2 wt% to 20 wt%, the fluorinated cyclic carbonate can form a stable SEI film at the interface between the negative electrode and the electrolyte solution, and the aggravation of gas production problem that occurs when the content of the fluorinated cyclic carbonate is too high can be avoided.

In an embodiment, the electrolyte solution further includes one or more of a chain ester, a fluorine-free cyclic ester, and an ether, optionally one or more of dimethyl carbonate, diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl acetate, propyl acetate, methyl propionate, ethyl propionate, tetrahydrofuran, dimethyl ether, diethyl ether, and ethylene glycol dimethyl ether.

A third aspect of the present disclosure provides a secondary battery, including the silicon-containing compound of the first aspect or the electrolyte solution for a secondary battery of the second aspect.

In an embodiment, the secondary battery includes a negative electrode active material, the negative electrode active material including a silicon-based material; optionally, the silicon-based material includes one or more of elemental silicon, a silicon-oxygen material, and a silicon-carbon material.

The theoretical gram capacity of a silicon-based negative electrode is significantly higher than that of a graphite negative electrode. However, due to the huge volume change during the cycle process, the silicon-based negative electrode material is prone to cracking and pulverizing of particles, which in turn causes the cracking and regeneration of the SEI film, resulting in a large irreversible capacity loss and a significant reduction in the cycle life of the battery. The silicon-containing compound of the present disclosure is particularly suitable for silicon-based negative electrode materials, and can effectively reduce the formation of water or hydrofluoric acid in the electrolyte solution, reduce impedance deterioration of the battery during cycling by generating an interface coating layer, and improve interface stability. In addition, the silicon-containing compound can form synergistic effects with fluoroethylene carbonate to improve the repair ability of the interface coating layer of the silicon-based material while reducing the gas production of fluoroethylene carbonate at high temperatures, thereby improving the cycle performance and storage performance of the battery at high temperatures.

In an embodiment, the content of the silicon-based material is greater than or equal to 10 wt%, optionally 20 wt% to 50 wt% based on the total weight of the negative electrode active material.

When the content of the silicon-based material is greater than or equal to 10 wt% based on the total weight of the negative electrode active material, the capacity and energy density of the battery can be greatly improved. However, the volume change of high content of the silicon-based material during the cycle process is too large, resulting in a significant decrease in the cycle performance. The addition of the silicon-containing compound in the electrolyte solution can effectively reduce the internal resistance of the battery and improve the cycle performance and storage performance of the battery.

A fourth aspect of the present disclosure provides an electrical device, including the secondary battery of the third aspect.

### BRIEF DESCRIPTION OF THE DRAWINGS

FIG. 1 is a schematic diagram of a secondary battery according to some embodiments of the present disclosure;
FIG. 2 is an exploded view of the secondary battery shown in FIG. 1 according to an embodiment of the present disclosure; and
FIG. 3 is a schematic diagram of an electrical device using a secondary battery as a power source according to an embodiment of the present disclosure.

List of reference numerals:
1. secondary battery; 11. housing; 12. electrode assembly; 13. cover plate.

### DETAILED DESCRIPTION

Embodiments of a binder, a preparation method, an electrode, a battery, and an electrical device of the present disclosure will be specifically disclosed in detail below with reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and the following descriptions are provided for those skilled in the art to fully understand the present disclosure, and are not intended to limit the subject matter described in the claims.

A "range" disclosed in the present disclosure is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, i.e., any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In the present disclosure, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps of the present disclosure may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in the present disclosure may be open-ended or closed-ended. For example, the terms such as "include", "comprise", and their variants may mean that other components not listed may be further included or comprised, or only the listed components may be included or comprised.

Unless otherwise specified, the term "or" is inclusive in the present disclosure. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

An electrolyte solution in the prior art mainly uses lithium hexafluorophosphate as a lithium salt, and lithium hexafluorophosphate is likely to produce water and hydrogen fluoride during the cycle process and storage. Water easily reacts violently with metal materials, causing battery safety problems. Hydrogen fluoride will catalyze the decomposition of the electrolyte solution, destroying the interface structure between the electrolyte solution and the active material, and also lead to the dissolution of transition metal ions from the positive electrode active material, destroying the lattice structure, and deteriorating the performance of the battery core. In the prior art, an additive is usually added to the electrolyte solution to form an interface coating layer at the interface between the electrolyte solution and the active material by in-situ coating to improve the interface stability. However, the components of the interface coating layer formed in the prior art are limited, which cannot effectively protect the electrode active material during long-term charge-discharge cycles, and has an unsatisfactory effect on the performance improvement of the battery core. Moreover, the gas production is serious at high temperatures, making it difficult to effectively improve the high-temperature performance of the battery.

### [Silicon-containing compound]

Based on this, the present disclosure provides a silicon-containing compound, having a general formula represented by formula I, 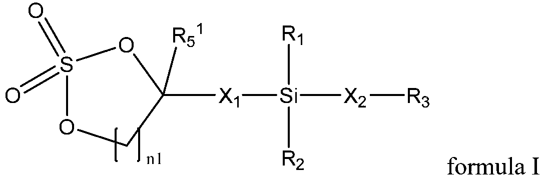
where X₁ and X₂ each independently include 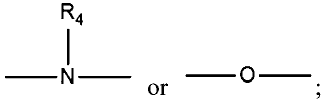
R₃ includes at least one of hydrogen, halogen, carbonyl, carboxyl, ester group, cyano, etheralkyl, halogen-substituted or unsubstituted C₁-C₁₀ alkyl, halogen-substituted or unsubstituted C₆-C₆₀ aryl, halogen-substituted or unsubstituted cyclic sulfonate group, halogen-substituted or unsubstituted cyclic sulfate group, halogen-substituted or unsubstituted cyclic sulfite group, halogen-substituted or unsubstituted cyclic sulfone group, and halogen-substituted or unsubstituted cyclic carbonate group;
R₁, R₂, R₄, and R₅¹ each independently include at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₁ is an integer from 1 to 6, optionally 1 or 2.

As used herein, "carbonyl" refers to

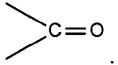

As used herein, "carboxyl" refers to

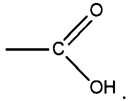

As used herein, "ester group" refers to

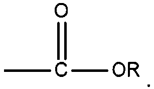

As used herein, "cyano" refers to

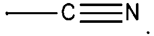

As used herein, "etheralkyl" refers to CₙH₂ₙ₊₁-O-.

As used herein, "C₁-C₁₀ alkyl" refers to a linear or branched hydrocarbon chain group consisting only of carbon and hydrogen atoms, optionally with an unsaturated bond present in the group, having one to ten carbon atoms, and attached to the rest of the molecule by a single bond.

As used herein, the term "C₆-C₆₀ aryl" refers to a monovalent group of a carbocyclic aromatic system having 6 to 60 carbon atoms.

As used herein, the term "substituted" means that at least one hydrogen atom of the compound or chemical moiety is substituted by another chemical moiety by a substituent. The substituents each independently include: hydroxyl, mercapto, amino, cyano, nitro, aldehyde group, halogen atom, alkenyl, alkynyl, aryl, heteroaryl, C₁₋C₆ alkyl, or C₁₋C₆ alkoxy.

As used herein, "halogen-substituted" means that at least one hydrogen atom in a group is substituted with a halogen atom, which includes at least one of F, Cl, Br, and I. In some embodiments, halogen-substituted is fluoro-substituted.

As used herein, the term "halogen-substituted C₁-C₁₀ saturated or unsaturated alkyl" refers to a C₁-C₁₀ alkyl in which at least one hydrogen atom is substituted with a halogen atom, and an unsaturated bond is optionally present in the C₁-C₁₀ alkyl.

In some embodiments, n₁ is 1 or 2. In this case, the cyclic ester structure is a five-membered ring or a six-membered ring. Such a ring structure has high activity, so the silicon-containing compound is likely to undergo ring-opening reaction to forming an interface coating layer on the surface of the electrode active material.

As used herein, the term "halogen-substituted C₆-C₆₀ aryl" refers to a C₆-C₆₀ aryl group in which at least one hydrogen atom is substituted with a halogen atom.

As used herein, a cyclic sulfonate group, refers to a heterocyclic group containing a sulfonate group, and a carbon on the heterocyclic ring is attached to X₂ in formula I. By way of example, the cyclic sulfonate group includes, but is not limited to, 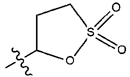 and

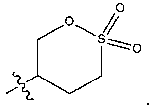

As used herein, a cyclic sulfate group, refers to a heterocyclic group containing a sulfate group, and a carbon on the heterocyclic ring is attached to X₂ in formula I. By way of example, the cyclic sulfate group includes, but is not limited to, 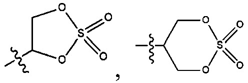 and

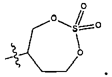

As used herein, a cyclic sulfite group, refers to a heterocyclic group containing a sulfite group, and a carbon on the heterocyclic ring is attached to X₂ in formula I. By way of example, the cyclic sulfite group includes, but is not limited to, 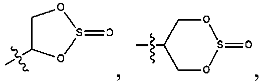 and

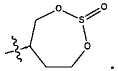

As used herein, a cyclic sulfone group, refers to a heterocyclic group containing a sulfone group, and a carbon on the heterocyclic ring is attached to X₂ in formula I. By way of example, the cyclic sulfone group includes, but is not limited to, 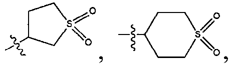 and

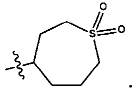

As used herein, a cyclic carbonate group, refers to a heterocyclic group containing a carbonate group, and a carbon on the heterocyclic ring is attached to X₂ in formula I. By way of example, the cyclic carbonate group includes, but is not limited to, 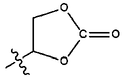 and 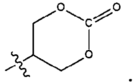 The structure of the silicon-containing compound of the present disclosure contains a -N-Si-O-, -N-Si-N-, or -O-Si-O- bond and a heterocyclic ring containing a sulfate group 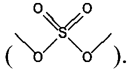 The Si-N bond and the Si-O bond easily react with moisture and hydrogen fluoride present in the battery, causing the chemical bonds to break, effectively removing the moisture and hydrogen fluoride in the battery, and improving the cycle performance and safety performance of the battery. The sulfate group in the silicon-containing compound is likely to undergo reductive decomposition to form an interface coating layer including sulfate, sulfite, sulfur-containing organic small molecule, sulfur-containing polymer, and the like during the charging and discharging process of the battery. The interface coating of sulfate and sulfite can improve the ion conduction properties of the electrode interface and reduce the interface impedance. The coating of sulfur-containing organic compounds can slow down the volume effect of the electrode active material during ion intercalation and extraction, which is conducive to improving interface stability and the cycle stability of the battery, especially at high temperatures.

In some embodiments, R₃ includes at least one of the following groups:
one or more of 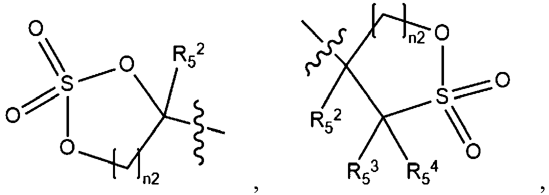 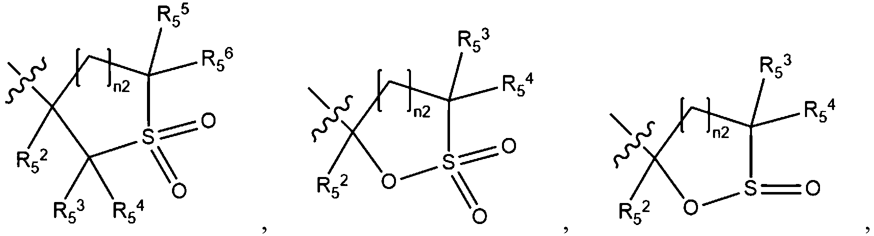 and 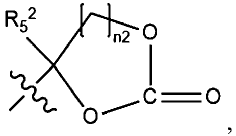
where R₅², R₅³, R₅⁴, *R₅⁵,* and R₅⁶ each independently include at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₂ is an integer from 1 to 6, optionally 1 or 2.

The silicon-containing compound contains a bicyclic ester structure connected by a -N-Si-O-, -N-Si-N-, or -O-Si-O- bond. Compared with a monocyclic ester structure, such a bicyclic ester structure connected by the -N-Si-O-, -N-Si-N-, or -O-Si-O- bond can more efficiently improve the battery performance, reduce the internal resistance of the battery, and improve the high-temperature cycle capacity retention rate and the high-temperature storage capacity retention rate of the battery.

In some embodiments, R₁, R₂, R₄, and R₅¹ each independently include at least one of hydrogen and halogen-substituted or unsubstituted C₁-C₃ alkyl.

In some embodiments, R₁, R₂, R₄, and R₅¹ each independently include hydrogen or F-substituted or unsubstituted C₁-C₃ alkyl.

In some embodiments, the compound represented by formula (I) includes at least one of compounds A11 to A20: 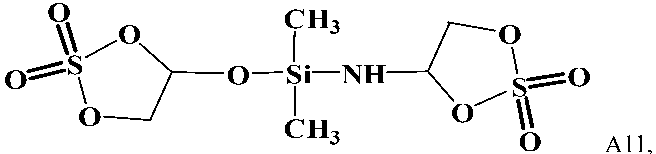 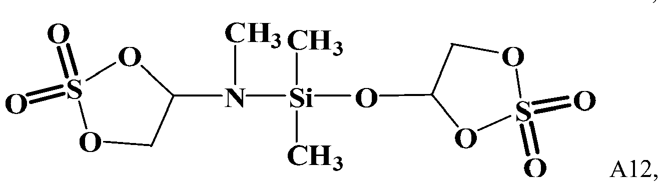 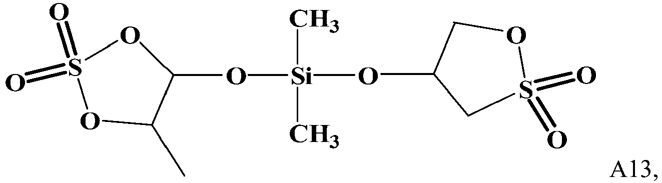 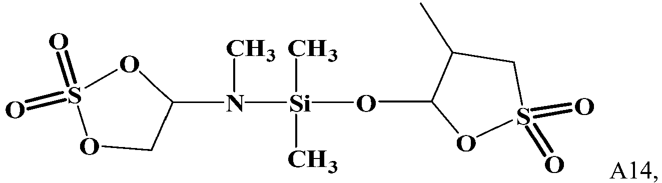 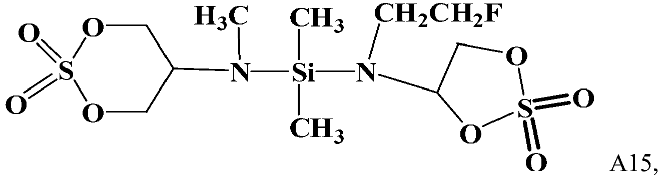 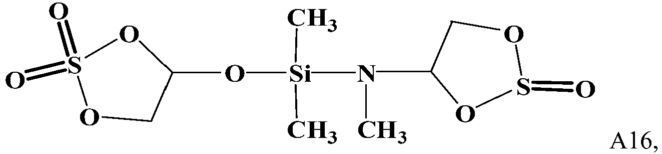 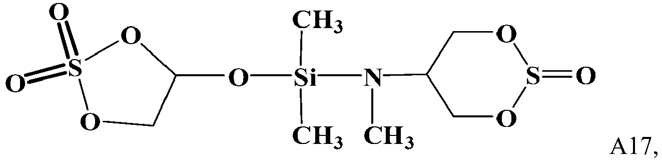 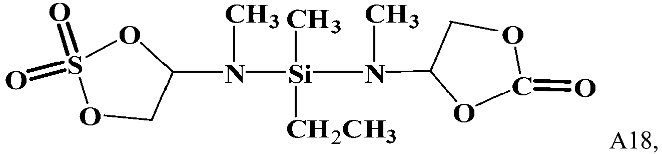 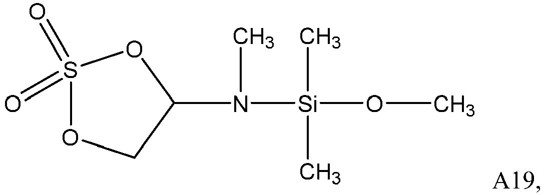 and

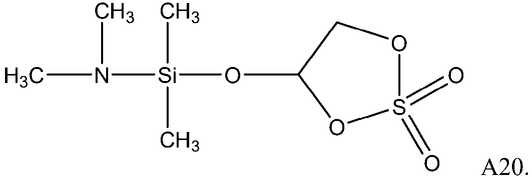

In some embodiments, the silicon-containing compound is added in a small amount in the electrolyte solution as an additive.

In some embodiments, the silicon-containing compound is added in a large amount in the electrolyte solution as a solvent.

### [Synthesis method of the silicon-containing compound]

Those skilled in the art may use known methods to synthesize the silicon-containing compound of the present disclosure, or may use alkylation of halogenated hydrocarbons and alkylation of amino groups to synthesize the silicon-containing compound according to the embodiments of the present disclosure by the following method. However, the synthesis method of the silicon-containing compound according to the embodiment of the present disclosure is not limited thereto.

In some embodiments, a cyclic ester monomer containing a halogen substituent and a monomer containing a hydroxyl group and represented by formula II are subjected to alkylation of a halogenated hydrocarbon in the presence of NaOH such that the halogen of the cyclic ester monomer reacts with the hydroxyl group of the monomer represented by formula II to prepare the silicon-containing compound or an intermediate product thereof 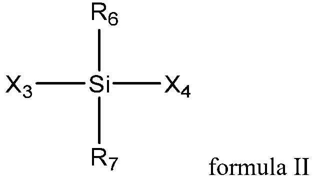 where R₆ and R₇ each independently include at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and X₃ and X₄ each independently include at least one of -NH₃, -OH, -OR₈, and -NH₂R₉, and R₈ and R₉ each independently include at least one of halogen, carbonyl, carboxyl, ester group, cyano, etheralkyl, halogen-substituted or unsubstituted C₁-C₁₀ alkyl, and halogen-substituted or unsubstituted C₆-C₆₀ aryl.

In some embodiments, a cyclic ester monomer containing a halogen substituent and a monomer containing an amino group and represented by formula II are subjected to an amino group alkylation reaction in an acidic environment such that the halogen of the cyclic ester monomer reacts with the amino group of the monomer represented by formula II to prepare the silicon-containing compound or an intermediate product thereof.

In some embodiments, after a cyclic ester monomer containing a halogen substituent and a monomer containing a hydroxyl group and represented by formula II are subjected to alkylation of a halogenated hydrocarbon in the presence of NaOH, the product and a monomer containing an amino group and represented by formula II are subjected to an amino group alkylation reaction in an acidic environment to prepare the silicon-containing compound.

In some embodiments, the silicon-containing compound A11 may be synthesized by the following method. 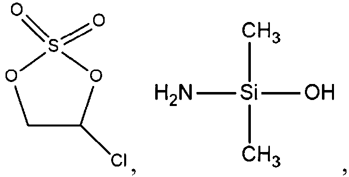 and NaOH are mixed in a solvent according to a molar ratio of 1:1:(1-2). After heating for 6-24 hours, the mixture is purified to obtain a product 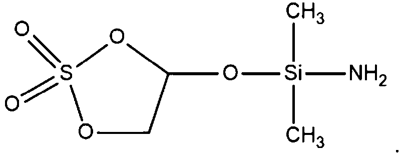 The product is mixed with 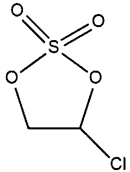 in a solvent according to a molar ratio of 1:1, and is allowed to react for 4-12 hours in an acidic environment with a pH of 3-6 to give the compound A11.

The reaction process is as follows.

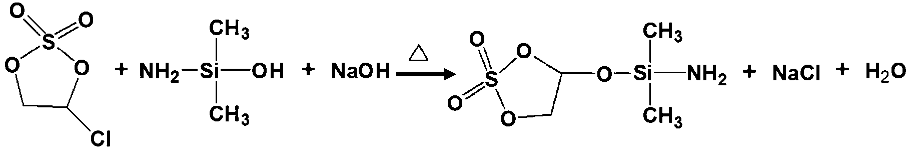

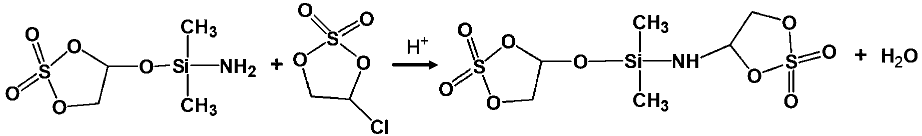

In some embodiments, the solvent may be N,N-dimethylformamide (DMF), dimethyl sulfoxide (DMSO), or acetone.

The compounds A12 to A20 may be synthesized with reference to the synthesis method of A11. The differences between the synthesis methods lie in that the monomer added is changed during the preparation process according to the target product. [Electrolyte solution for secondary battery]

An embodiment of the present disclosure provides an electrolyte solution for a secondary battery, including the silicon-containing compound of any one of the above embodiments.

In some embodiments, the content of the silicon-containing compound in the electrolyte solution is less than or equal to 30 wt%, optionally 0.3 wt% to 10 wt% based on the total weight of the electrolyte solution.

In some embodiments, the content of the silicon-containing compound in the electrolyte solution is optionally 0.3%, 0.4%, 0.5%, 0.6%, 0.7%, 0.8%, 0.9%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30% based on the total weight of the electrolyte solution.

When the content of the silicon-containing compound in the electrolyte solution is within a suitable range, the interface stability can be improved, the internal resistance of the battery can be reduced, and the cycle performance and storage stability of the battery can be improved, especially at high temperatures.

In some embodiments, the silicon-containing compound may be used as a solvent in the electrolyte solution. When the silicon-containing compound is used as a solvent in the electrolyte solution, the silicon-containing compound can form an interface coating layer on the electrode surface to reduce direct contact between the electrolyte solution and the electrode active material, thereby improving interface stability and reducing the internal resistance of the battery.

In some embodiments, the silicon-containing compound may be used as a solvent in the electrolyte solution. When the silicon-containing compound is used as an additive in the electrolyte solution, the silicon-containing compound can form synergistic effects with a solvent or other additives in the electrolyte solution to further optimize the SEI film to reduce the internal resistance of the battery, thereby improving the cycle performance and storage performance of the battery, especially at high temperatures.

In some embodiments, the electrolyte solution may further include fluorinated cyclic carbonate.

Due to its weak reduction resistance, the fluorinated cyclic carbonate will undergo reductive decomposition on the negative electrode surface earlier than other solvents, which is conducive to the formation of a stable interface film on the negative electrode surface to improve the cycle stability of the battery. In addition, the fluorinated cyclic carbonate may be used as an additive together with the silicon-containing compound, to further reduce the internal resistance of the battery, improve the interface stability, and improve the cycle performance and storage performance of the battery.

In some embodiments, the fluorinated cyclic carbonate may include one or more of fluoroethylene carbonate, difluoroethylene carbonate, trifluoropropylene carbonate, 4-((2,2,3,3-tetrafluoropropoxy)methyl)-1,3-dioxolan-2-one, and 4-(2,2,3,3,4,4,5,5,5-nonafluoropentyl)-1,3-dioxolan-2-one.

The fluorinated cyclic carbonate can form an effective SEI film on the electrode surface to increase the ion migration rate in the electrolyte solution, thereby improving the charging and discharging performance of the battery at high rate. For a silicon-carbon negative electrode active material, the fluoroethylene carbonate can form a thin SEI film with toughness and self-healing properties and therefore can suppress the problem of structural fragmentation caused by volume expansion of the silicon-based material during charge and discharge, thereby improving the service life of the silicon-based material.

In some embodiments, the content of the fluorinated cyclic carbonate is 2 wt% to 20 wt%, optionally 5 wt% to 15 wt% based on the total weight of the electrolyte solution.

In some embodiments, the content of the fluorinated cyclic carbonate is optionally 2%, 3%, 4%, 5%, 6%, 7%, 8%, 9%, 10%, 11%, 12%, 13%, 14%, 15%, 16%, 17%, 18%, 19%, or 20%.

When the content of the fluorinated cyclic carbonate is 2 wt% to 20 wt%, the fluorinated cyclic carbonate can form a stable SEI film at the interface between the negative electrode and the electrolyte solution, and the aggravation of gas production problem that occurs when the content of the fluorinated cyclic carbonate is too high can be avoided.

In some embodiments, the electrolyte solution further includes one or more of a chain ester, a fluorine-free cyclic ester, and an ether, optionally one or more of dimethyl carbonate, diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl acetate, propyl acetate, methyl propionate, ethyl propionate, tetrahydrofuran, dimethyl ether, diethyl ether, and ethylene glycol dimethyl ether. In some embodiments, the electrolyte solution contains ethylene carbonate and ethyl methyl carbonate.

In some embodiments, the electrolyte solution further includes an electrolyte salt The electrolyte salt may include one or more of LiN(CₓF₂ₓ₊₁SO₂)(C_{y}F_{2y+1}SO₂), LiPF₆, LiBF₄, LiBOB, LiAsF₆, Li(FSO₂)₂N, LiCF₃SO₃, and LiClO₄, where x and y are natural numbers.

### [Positive electrode]

The positive electrode includes a positive electrode current collector and a positive electrode film layer arranged on at least one surface of the positive electrode current collector. The positive electrode film layer includes the positive electrode active material of the first aspect of the present disclosure.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode active material may be a positive electrode active material well-known in the art for use in a battery. By way of example, the positive electrode active material may include at least one of the following materials: a lithium-containing phosphate of an olivine structure, lithium transition metal oxide, and modified compounds thereof. However, the present disclosure is not limited to these materials, and other conventional materials that can be used as a positive electrode active material of a battery may also be used. These positive electrode active materials may be used alone or in combination. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (or briefly referred to as NCM₃₃₃), LiNi_{0.5}Co_{0.2}Mn_{0.3}O₂ (or briefly referred to as NCM₅₂₃), LiNi_{0.5}Co_{0.25}Mn_{0.25}O₂ (or briefly referred to as NCM₂₁₁), LiNi_{0.6}Co_{0.2}Mn_{0.2}O₂ (or briefly referred to as NCM₆₂₂), or LiNi_{0.8}Co_{0.1}Mn_{0.1}O₂ (or briefly referred to as NCM₈₁₁)), lithium nickel cobalt aluminum oxide (e.g., LiNi_{0.85}Co_{0.15}Al_{0.05}O₂), and modified compounds thereof. Examples of the lithium-containing phosphate of the olivine structure may include, but are not limited to, at least one of lithium iron phosphate (e.g., LiFePO₄ (or briefly referred to as LFP)), a composite material of lithium iron phosphate and carbon, lithium manganese phosphate (e.g., LiMnPO₄), a composite material of lithium manganese phosphate and carbon, lithium iron manganese phosphate, and a composite material of lithium manganese iron phosphate and carbon.

In some embodiments, the positive electrode active material is a nickel-rich material, and the molar ratio of the nickel element in the transition metal of the positive electrode active material is higher than 85%.

In some embodiments, the positive electrode film layer optionally further includes a binder. By way of example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. By way of example, the conductive agent may include at least one of superconducting carbon, acetylene black, carbon black, Ketjen black, carbon dots, carbon nanotubes, graphene, and carbon nanofibers.

In some embodiments, the positive electrode may be prepared in the following manner. The components for preparing the positive electrode, such as the positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode.

### [Negative electrode]

The negative electrode includes a negative electrode current collector and a negative electrode film layer arranged on at least one surface of the negative electrode current collector. The negative electrode film layer includes a negative electrode active material.

By way of example, the negative electrode current collector has two opposite surfaces in a thickness direction thereof, and the negative electrode film layer is arranged on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of the polymer material base layer. The composite current collector may be formed by forming a metal material (e.g., copper, a copper alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for use in a battery. By way of example, the negative electrode active material may include at least one of the following materials: lithium metal, a lithium alloy, artificial graphite, natural graphite, soft carbon, hard carbon, a silicon-based material, a tin-based material, lithium titanate, etc. The silicon-based material may include at least one of elemental silicon, a silicon-oxygen material, a silicon-carbon material, a silicon-nitrogen material, and a silicon alloy. The tin-based material may include at least one of elemental tin, a tin-oxide compound, and a tin alloy. However, the present disclosure is not limited to these materials, and other conventional materials that can be used as a negative electrode active material of a battery may also be used. These negative electrode active materials may be used alone or in combination.

In some embodiments, the negative electrode film layer optionally further includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer optionally further includes other auxiliary agents, for example, a thickener (e.g., sodium carboxymethyl cellulose (CMC-Na)).

In some embodiments, the negative electrode may be prepared in the following manner. The components for preparing the negative electrode, such as the negative electrode active material, the conductive agent, the binder, and any other component, are dispersed in a solvent (e.g., deionized water) to form a negative electrode slurry. The negative electrode slurry is coated on the negative electrode current collector, followed by drying, cold pressing, and other processes, to obtain the negative electrode.

### [Separator]

In some embodiments, the secondary battery further includes a separator. The type of the separator is not particularly limited in the present disclosure, and any well-known separator of a porous structure having good chemical stability and mechanical stability may be used.

In some embodiments, the material of the separator may include at least one of glass fiber, non-woven cloth, polyethylene, polypropylene, and polyvinylidene fluoride. The separator may be a single-layer film or a multi-layer composite film, which is not particularly limited herein. When the separator is a multi-layer composite film, the layers may be of the same or different materials, which is not particularly limited herein.

### [Secondary battery]

An embodiment of the present disclosure provides a secondary battery, including the electrolyte solution of any one of the above embodiments.

In some embodiments, the secondary battery is a lithium-ion secondary battery or a sodium-ion secondary battery.

In some embodiments, the secondary battery includes a negative electrode active material, the negative electrode active material including a silicon-based material. Optionally, the silicon-based material includes one or more of elemental silicon, a silicon-oxygen material, and a silicon-carbon material.

The theoretical gram capacity of a silicon-based negative electrode is significantly higher than that of a graphite negative electrode. However, due to the huge volume change during the cycle process, the silicon-based negative electrode material is prone to cracking and pulverizing of particles, which in turn causes the cracking and regeneration of the SEI film, resulting in a large irreversible capacity loss and a significant reduction in the cycle life of the battery. The silicon-containing compound of the present disclosure is particularly suitable for silicon-based negative electrode active materials, and can effectively reduce the formation of water or hydrofluoric acid in the electrolyte solution, reduce impedance deterioration of the battery during cycling by generating an interface coating layer, and improve interface stability. In addition, the silicon-containing compound can form synergistic effects with fluoroethylene carbonate to improve the repair ability of the interface coating layer of the silicon-based material while reducing the gas production of fluoroethylene carbonate at high temperatures, thereby improving the cycle performance and storage performance of the battery at high temperatures.

In some embodiments, the content of the silicon-based material is greater than or equal to 10 wt%, optionally 20 wt% to 50 wt% based on the total weight of the negative electrode active material.

In an embodiment, the content of the silicon-based material is optionally 10%, 15%, 20%, 25%, 30%, 35%, 40%, 45%, or 50% based on the total weight of the negative electrode active material.

When the content of the silicon-based material is greater than or equal to 10 wt% based on the total weight of the negative electrode active material, the capacity and energy density of the battery can be greatly improved. However, the volume change of high content of the silicon-based material during the cycle process is too large, resulting in a significant decrease in the cycle performance. The addition of the silicon-containing compound in the electrolyte solution can effectively reduce the internal resistance of the battery and improve the cycle performance and storage performance of the battery.

In some embodiments, the secondary battery may include an outer package. The outer package may be configured to package the above electrode assembly and electrolyte solution.

In some embodiments, the outer package of the secondary battery may be a hard housing, such as a hard plastic housing, an aluminum housing, or a steel housing. The outer package of the secondary battery may also be a soft package, such as a pouch-type soft package. The material of the soft package may be plastic. Examples of the plastic may include polypropylene, polybutylene terephthalate, polybutylene succinate, and the like.

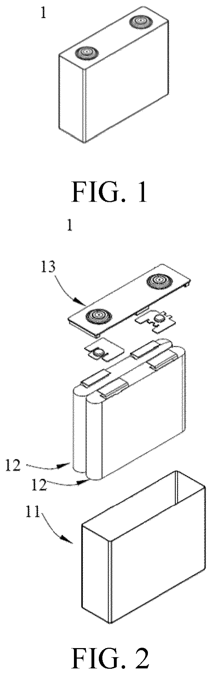

The shape of the secondary battery is not particularly limited in the present disclosure, and may be a cylinder, a rectangle, or any other shape. For example, FIG. 1 shows a secondary battery 1 having a rectangle structure as an example.

In some embodiments, referring to FIG. 2, the outer package may include a housing 11 and a cover plate 13. The housing 11 may include a bottom plate and side plates connected to the bottom plate, and the bottom plate and the side plates enclose an accommodating cavity. The housing 11 has an opening in communication with the accommodating cavity, and the cover plate 13 can cover the opening, to close the accommodating cavity. The positive electrode, the negative electrode, and the separator may be made into an electrode assembly 12 by a winding process or a lamination process. The electrode assembly 12 is encapsulated in the accommodating cavity. The electrode assembly 12 is infiltrated by the electrolyte solution. The number of electrode assemblies 12 included in the secondary battery 1 may be one or more, and may be determined by those skilled in the art according to actual requirements.

In addition, the present disclosure further provides an electrical device. The electrical device includes the secondary battery of the present disclosure. The secondary battery can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

Whether to use the secondary battery, the battery module, or the battery pack may be determined according to use requirements of the electrical device.

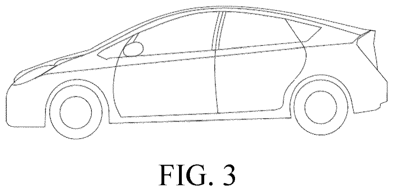

FIG. 3 shows an electrical device as an example. The electrical device is a pure electric vehicle, a hybrid electric vehicle, a plug-in hybrid electric vehicle, or the like.

For another example, the electrical device may be a mobile phone, a tablet computer, a notebook computer, or the like. The electrical device is generally required to be light and thin, and may use a secondary battery as a power source.

### Examples

Examples of the present disclosure are described below. The examples described below are illustrative, are merely used to explain the present disclosure, and should not be construed as a limitation to the present disclosure. Where no specific technologies or conditions are indicated in the embodiments, the technologies or conditions described in the literatures in the art or the instructions for the product are followed. The reagents or instruments for which no manufacturers are noted are all common products commercially available from the market.

### I. Preparation method

### Example 1

### (1). Preparation of positive electrode

Positive electrode: A positive electrode active material LiNi_{0.8}Co_{0.1}Mn_{0.1}O₂ (NCM811), a conductive agent acetylene black, and a binder polyvinylidene fluoride (PVDF) were mixed uniformly at a weight ratio of 90:5:5 by fully stirring in N-methylpyrrolidone (NMP) as a solvent, to form a positive electrode slurry. Then, the positive electrode slurry was evenly coated on a positive electrode current collector, dried, cold-pressed, and cut to obtain the positive electrode.

### (2). Preparation of negative electrode

Negative electrode: A negative electrode active material (where the mass ratio of silicon oxide to graphite is 3:7), a conductive agent acetylene black, a binder styrene-butadiene rubber (SBR), and a thickener sodium carboxymethyl cellulose (CMC) were uniformly mixed at a weight ratio of 90:4:4:2 by fully stirring in a suitable amount of deionized water as a solvent, to prepare a negative electrode slurry. The negative electrode slurry was evenly coated on a copper foil serving as a negative electrode current collector for one or more times, and dried to obtain a negative electrode film, which was then cold-pressed and cut to obtain the negative electrode.

### (3). Preparation of electrolyte solution

In a glove box under an argon atmosphere (H₂O<0.1 ppm, O₂<0.1 ppm), organic solvents ethylene carbonate (EC) and ethyl methyl carbonate (EMC) were uniformly mixed at a volume ratio of 3:7, a lithium salt LiPF₆ in a content of 12.5 wt% was added and dissolved in the organic solvents, following by the addition of the compound A11 in a content of 1 wt% as an additive and uniform stirring to obtain an electrolyte solution.

### (4). Separator

A polypropylene film was used as a separator.

### (5). Preparation of battery

The positive electrode, the separator, and the negative electrode were laminated in order such that the separator was placed between and served to separate the positive electrode and the negative electrode, and then wound to obtain the electrode assembly. The electrode assembly was placed in a battery housing, and was injected with an electrolyte solution after drying, followed by formation, standing, and other processes to obtain a lithium-ion battery.

### Examples 2-10

In Examples 2 to 10, the compounds A12, A13, A14, A15, A16, A17, A18, A19, and A20 were respectively used as additives in the electrolyte solution, and the other processes were substantially the same as those in Example 1.

### Examples 11-18

In Examples 11 to 18, the content of the compound A12 as an additive in the electrolyte solution was adjusted, and the other processes were substantially the same as those in Example 2.

### Example 19

In Example 19, the preparation method of the electrolyte solution was adjusted, and the other steps were substantially the same as those in Example 2.

The preparation method of the electrolyte solution in Example 19 was as follows. In a glove box under an argon atmosphere (H₂O<0.1 ppm, O₂<0.1 ppm), organic solvents ethylene carbonate (EC), ethyl methyl carbonate (EMC), and fluoroethylene carbonate (FEC) were uniformly mixed at a volume ratio of 2:7:1, a lithium salt LiPF₆ in a content of 12.5 wt% was added and dissolved in the organic solvents, following by the addition of the compound A11 in a content of 1 wt% as an additive and uniform stirring to obtain the electrolyte solution of Example 19.

### Comparative Example 1

No additive was added to the electrolyte solution of Comparative Example 1, and the other steps were substantially the same as those in Example 1.

### Comparative Examples 2-3

In Comparative Examples 2-3, ethylene sulfate and 1,3-propanesultone were used as additives in the electrolyte solution, and the other steps were substantially the same as those in Example 1.

The specific parameters are shown in Table 1.

### II. Performance test of battery

### 1. Capacity retention rate after 1000 cycles at 45°C

At 45°C, each of the lithium-ion batteries prepared in the examples and comparative examples was charged to 4.3 V at a constant current of 1C, then charged at a constant voltage of 4.3 V to a current of less than 0.05C, and then discharged to 3.0 V at a constant current of 1C. This was a charge-discharge cycle, and the discharge capacity at this moment was recorded as the discharge capacity of the battery after the first cycle. The above charge-discharge cycle was repeated, the discharge capacity of the battery after 1000 cycles was recorded, and the capacity retention rate of the lithium-ion battery after 1000 cycles was calculated.

Capacity retention rate of the battery after 1000 cycles at 45°C = (discharge capacity after 1000 cycles / discharge capacity after the first cycle) × 100%.

### 2. Increase rate of internal resistance of battery

At 25°C, each of the lithium-ion batteries prepared in the examples and comparative examples and having been charged and discharged for 1000 cycles at 45°C was charged to 4.3 V at a constant current of 1C, then charged at a constant voltage of 4.3 V to a current of less than 0.05C, and then discharged at 1C for 30 minutes, that is, to adjust the SOC of the battery to 50%. Then, positive and negative probes of a TH2523AAC internal resistance tester were respectively contacted with positive and negative electrodes of the battery, and internal resistance values of the battery were read through the internal resistance tester, which were recorded as an initial internal resistance R1 (mΩ) of the battery and an internal resistance R2 (mΩ) of the battery after 1000 cycles. Increase rate of the internal resistance of the battery = (R2 - R1) / R1 × 100%.

### 3. Capacity retention rate after 100 days of storage at 60°C

At 25°C, each of the lithium-ion batteries prepared in the examples and comparative examples was charged to a voltage of 4.3 V at a constant current of 1C, then charged at a constant voltage of 4.3 V to a current of 0.05C, and then discharged to 3.0 V at a constant current of 1C. This was a charge-discharge cycle, and at this moment, the lithium was tested. Then, the fully charged lithium-ion battery was placed in a 60°C incubator to test the capacity after 100 days of storage.

Capacity retention rate after 100 days of storage at 60°C (%) = (discharge capacity after 100 days of storage / discharge capacity after the first cycle) × 100%.

### III. Test results

The test results of the above examples and comparative examples are shown in Table 1.

**Table 1**

| No. | Other organic components | Silicon-containing compound | Content (wt%) | Increase rate of internal resistance after 1000 cycles | Capacity retention rate after 1000 cycles | Capacity retention rate after 100 days of storage at 60°C |
|---|---|---|---|---|---|---|
| Example 1 | EC+EMC | Compound A11 | 1.0% | 58.1% | 47.6% | 40.5% |
| Example 2 | EC+EMC | Compound A12 | 1.0% | 54.8% | 49.2% | 43.3% |
| Example 3 | EC+EMC | Compound A13 | 1.0% | 57.1% | 47.3% | 42.6% |
| Example 4 | EC+EMC | Compound A14 | 1.0% | 56.7% | 46.1% | 40.3% |
| Example 5 | EC+EMC | Compound A15 | 1.0% | 59.5% | 48.3% | 41.8% |
| Example 6 | EC+EMC | Compound A16 | 1.0% | 59.9% | 44.0% | 37.4% |
| Example 7 | EC+EMC | Compound A17 | 1.0% | 61.4% | 43.3% | 35.2% |
| Example 8 | EC+EMC | Compound A18 | 1.0% | 64.1% | 43.8% | 36.0% |
| Example 9 | EC+EMC | Compound A19 | 1.0% | 75.2% | 39.5% | 32.5% |
| Example 10 | EC+EMC | Compound A20 | 1.0% | 74.2% | 38.7% | 31.8% |
| Example 11 | EC+EMC | Compound A12 | 0.1% | 83.2% | 30.4% | 24.7% |
| Example 12 | EC+EMC | Compound A12 | 0.3% | 59.1% | 47.1% | 39.2% |
| Example 13 | EC+EMC | Compound A12 | 3.0% | 60.3% | 48.3% | 40.9% |
| Example 14 | EC+EMC | Compound A12 | 8.0% | 71.4% | 31.5% | 26.8% |
| Example 15 | EC+EMC | Compound A12 | 10.0% | 71.9% | 30.2% | 25.6% |
| Example 16 | EC+EMC | Compound A12 | 15.0% | 73.0% | 29.0% | 24.5% |
| Example 17 | EC+EMC | Compound A12 | 30.0% | 76.2% | 28.3% | 23.7% |
| Example 18 | EC+EMC | Compound A12 | 35.0% | 86.3% | 27.4% | 22.0% |
| Example 19 | EC+EMC+FEC | Compound A12 | 1.0% | 52.4% | 52.3% | 45.2% |
| Comparative Example 1 | EC+EMC | / | / | 97.5% | 20.8% | 10.9% |
| Comparative Example 2 | EC+EMC | Ethylene sulfate | 1.0% | 94.7% | 26.2% | 21.3% |
| Comparative Example 3 | EC+EMC | 1,3-propanesultone | 1.0% | 95.1% | 25.5% | 19.4% |

As can be seen from Table 1, the electrolyte solutions of Examples 1 to 19 all contained the silicon-containing compound represented by formula I, and the batteries of Examples 1 to 19 all exhibited a lower internal resistance increase rate and more excellent high-temperature cycle performance and high-temperature storage performance than the batteries prepared using the electrolyte solutions not containing the silicon-containing compound in Comparative Examples 1 to 3.

From the comparison between Examples 1 to 10 and Comparative Example 1, it can be seen that the addition of the silicon-containing compound could significantly reduce the internal resistance increase rate of the battery and improve the high-temperature cycle performance and high-temperature storage performance of the battery, compared with the electrolyte solutions not containing the silicon-containing compound. The capacity retention rates of the batteries of Examples 1 to 10 after 1000 cycles were about 1.5 to 2.5 times that of the battery of Comparative Example 1, and the capacity retention rates of the batteries of Examples 1 to 10 after 300 days of storage at 60°C were about 3 to 4 times that of the battery of Comparative Example 1.

From the comparison between Examples 11 to 18 and Comparative Example 1, it can be seen that compared with the electrolyte solutions not containing the silicon-containing compound, when the content of the silicon-containing compound was 0.1 wt% to 35 wt% based on the total weight of the electrolyte solution, the internal resistance increase rate of the battery during the cycle process was decreased and the cycle capacity retention rate was increased.

From the comparison between Examples 11 to 18 and Comparative Example 1, it can be seen that compared with the electrolyte solutions not containing the silicon-containing compound, when the content of the silicon-containing compound was 0.3 wt% to 10 wt% based on the total weight of the electrolyte solution, the cycle capacity retention rate and the high-temperature storage capacity retention rate of the battery were significantly improved.

From the comparison between Examples 1 to 19 and Comparative Examples 2 to 3, it can be seen that compared with the electrolyte solutions containing ethylene sulfate or 1,3-propanesultone as an additive, the electrolyte solutions respectively containing the silicon-containing compounds A11 to A20 as additives could greatly reduce the internal resistance increase rate during the cycle process and improve the high-temperature cycle performance and high-temperature storage performance of the battery.

From the comparison between Examples 1 to 8 and Examples 9 to 10, it can be seen that compared with the silicon-containing compound containing a monocyclic ester structure, the silicon-containing compound containing a bicyclic ester structure could more significantly reduce the internal resistance increase rate of the electrolyte solution and improve the cycle performance and storage performance of the battery at high temperatures.

From the comparison between Example 2 and Example 19, it can be seen that when the electrolyte solution contained EC and EMC and used the silicon-containing compound A12 as an additive, the addition of fluoroethylene carbonate (FEC) could form synergistic effects with the silicon-containing compound A12 to further reduce the internal resistance increase rate of the battery and improve the high-temperature cycle performance and high-temperature storage performance of the battery.

It should be noted that the present disclosure is not limited to the above embodiments. The above embodiments are merely examples, and embodiments having substantially the same configuration as the technical idea and achieving the same functions and effects within the technical scope of the present disclosure are included in the technical scope of the present disclosure. In addition, various modifications that can be figured out by those skilled in the art and other embodiments obtained by combining some constituent elements in the embodiments without departing from the essence of the present disclosure are also included in the scope of the present disclosure.

## Claims

1. A silicon-containing compound, having a general formula represented by formula I, 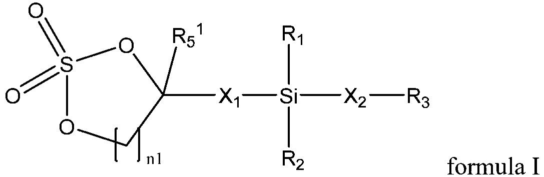
wherein X₁ and X₂ each independently comprise 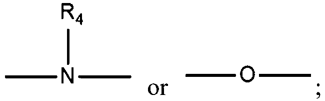
R₃ comprises at least one of hydrogen, halogen, carbonyl, carboxyl, ester group, cyano, etheralkyl, halogen-substituted or unsubstituted C₁-C₁₀ alkyl, halogen-substituted or unsubstituted C₆-C₆₀ aryl, halogen-substituted or unsubstituted cyclic sulfonate group, halogen-substituted or unsubstituted cyclic sulfate group, halogen-substituted or unsubstituted cyclic sulfite group, halogen-substituted or unsubstituted cyclic sulfone group, and halogen-substituted or unsubstituted cyclic carbonate group;
R₁, R₂, R₄, and R₅¹ each independently comprise at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₁ is an integer from 1 to 6, optionally 1 or 2.

2. The silicon-containing compound according to claim 1, wherein R₃ comprises at least one of the following groups:
one or more of 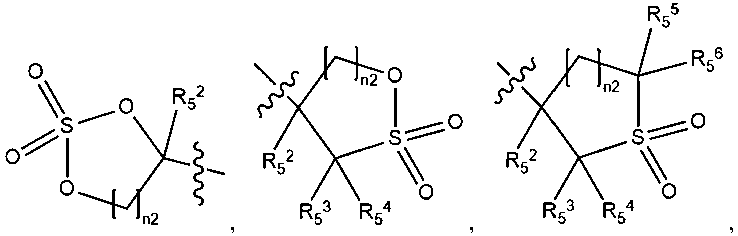 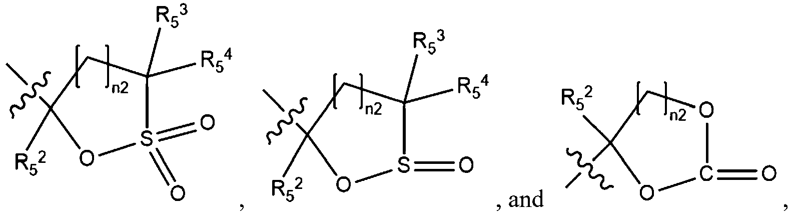
wherein R₅², R₅³, R₅⁴, *R₅⁵,* and R₅⁶ each independently comprise at least one of hydrogen, halogen-substituted or unsubstituted C₁-C₁₀ saturated or unsaturated alkyl, halogen-substituted or unsubstituted C₆-C₆₀ aryl, carbonyl, carboxyl, ester group, cyano, or an etheralkyl; and
n₂ is an integer from 1 to 6, optionally 1 or 2.

3. The silicon-containing compound according to claim 1 or 2, wherein R₁, R₂, R₄, and R₅¹ each independently comprise at least one of hydrogen and halogen-substituted or unsubstituted C₁-C₃ alkyl.

4. The silicon-containing compound according to claim 1 or 2, wherein the compound represented by formula (I) comprises at least one of compounds A11 to A20: 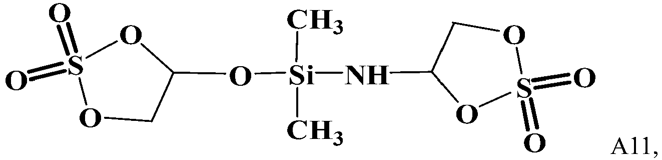 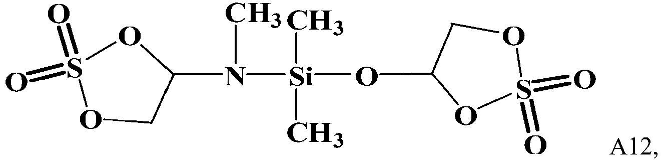 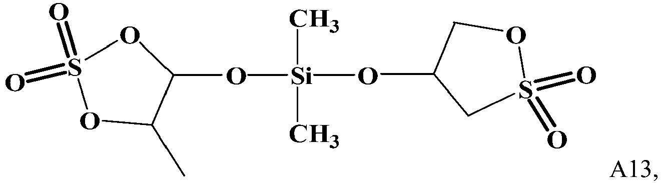 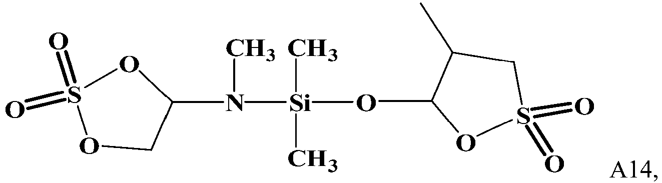 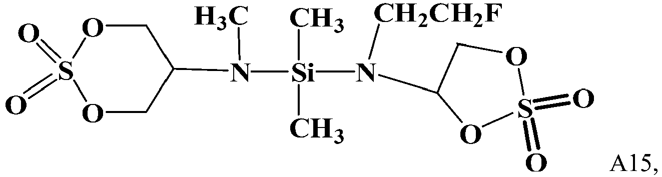 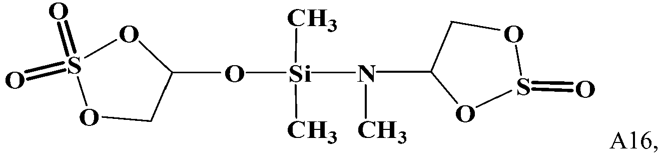 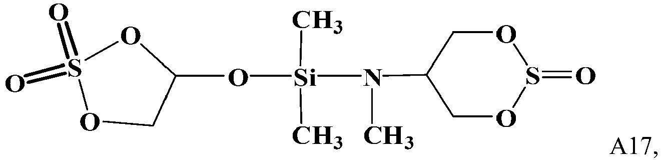 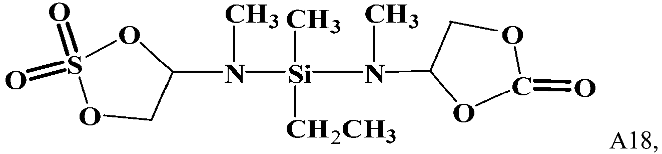 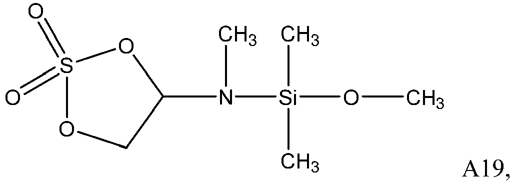 and

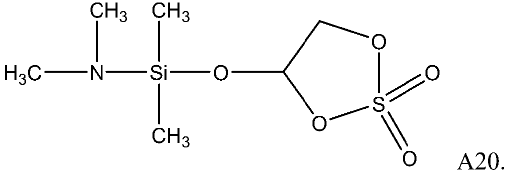

5. An electrolyte solution for a secondary battery, wherein the electrolyte solution comprises the silicon-containing compound according to any one of claims 1 to 4.

6. The electrolyte solution according to claim 5, wherein the content of the silicon-containing compound in the electrolyte solution is less than or equal to 30 wt%, optionally 0.3 wt% to 10 wt% based on the total weight of the electrolyte solution.

7. The electrolyte solution according to claim 5 or 6, wherein the electrolyte solution further comprises fluorinated cyclic carbonate; and optionally, the fluorinated cyclic carbonate comprises one or more of fluoroethylene carbonate, difluoroethylene carbonate, trifluoropropylene carbonate, 4-((2,2,3,3-tetrafluoropropoxy)methyl)-1,3-dioxolan-2-one, and 4-(2,2,3,3,4,4,5,5,5-nonafluoropentyl)-1,3-dioxolan-2-one.

8. The electrolyte solution according to any one of claims 5 to 7, wherein the content of the fluorinated cyclic carbonate is 2 wt% to 20 wt%, optionally 5 wt% to 15 wt% based on the total weight of the electrolyte solution.

9. The electrolyte solution according to any one of claims 5 to 8, wherein the electrolyte solution further comprises one or more of a chain ester, a fluorine-free cyclic ester, and an ether, optionally one or more of dimethyl carbonate, diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl acetate, propyl acetate, methyl propionate, ethyl propionate, tetrahydrofuran, dimethyl ether, diethyl ether, and ethylene glycol dimethyl ether.

10. A secondary battery, comprising the electrolyte solution according to any one of claims 5 to 9.

11. The secondary battery according to claim 10, wherein the secondary battery comprises a negative electrode active material, the negative electrode active material comprising a silicon-based material;
optionally, the silicon-based material comprises one or more of elemental silicon, a silicon-oxygen material, and a silicon-carbon material; and
optionally, the content of the silicon-based material is greater than or equal to 10 wt%, optionally 20 wt% to 50 wt% based on the total weight of the negative electrode active material.

12. An electrical device, comprising the secondary battery according to claim 10 or 11.
